# EUROPÄISCHE PATENTANMELDUNG

(11) **EP 3 764 218 A1**
(43) Veröffentlichungstag der Anmeldung: **13.01.2021**
(21) Anmeldenummer: 19185768.9
(22) Anmeldetag: 11.07.2019
(51) Int. Cl.: G06F 8/20, G06F 9/451

(54) **VERFAHREN ZUR RECHNERGESTÜTZTEN INTERAKTION EINES BEDIENERS MIT EINEM MODELL EINES TECHNISCHEN SYSTEMS**

(71) Anmelder: Siemens Aktiengesellschaft, 80333 München (DE)
(72) Erfinder: Neidig, Jörg, 90409 Nürnberg (DE); Graf, Rene, 90513 Zirndorf (DE); Wurm, Kai, 81739 München (DE)

(57) **Zusammenfassung**

Es wird ein Verfahren zur rechnergestützten Interaktion eines Bedieners mit einem auf einem Rechner (10) ausgeführten Entwicklungswerkzeug, mit dem ein Modell eines technischen Systems erzeugt und/oder konfiguriert werden kann, beschrieben. Es werden eine Anzahl an aufeinanderfolgenden Eingaben (E1,...,En), die an einer Bedienerschnittstelle (11) des Rechners (10) empfangen werden, zur Konfiguration zumindest eines Objekts (O1, O2) des technischen Systems verarbeitet. Anschließend wird eine Eingabekontextinformation (EKI1,..., EKIn) für die aufeinanderfolgenden Eingaben (E1,...,En) erzeugt und in einer Historie (H) gespeichert, wobei die Eingabekontextinformationen (EKI1,..., EKIn) in der Historie (H) in der Reihenfolge des Empfangs an der Bedienerschnittstelle (11) vorliegen. Als Eingabekontextinformation (EKI1,..., EKIn) werden für die Anzahl an Eingaben (E1,...,En) jeweils eine Aktion (A1,...,An) der Eingabe (E1,...,En), die einen zur Konfiguration des Objekts (O1, O2) erforderlichen Schritt umfasst, und ein Ziel (Z1,...,Zn) der Aktion, das zumindest einen Parameter der Aktion (A1,...,An) umfasst, gespeichert.

## Beschreibung

Die Erfindung betrifft ein Verfahren zur rechnergestützten Interaktion eines Bedieners mit einem auf einem Rechner ausgeführten Entwicklungswerkzeug, mit dem ein Modell eines technischen Systems erzeugt und/oder konfiguriert werden kann. Die Erfindung betrifft ferner ein Computerprogrammprodukt sowie einen Rechner zur Durchführung des Verfahrens.

Es sind Interaktionssysteme und/oder Entwicklungswerkzeuge bekannt, welche einen Systementwickler und/oder Bediener technischer Anlagen mithilfe eines Modells bei der Bewältigung von Einrichtungs- und/oder Wartungsarbeiten unterstützen. In einem solchen Entwicklungswerkzeug kann ein Modell des technischen Systems geplant und/oder visualisiert werden, wobei ein Rückgriff auf Bibliotheken besteht, um technische Komponenten (sogenannte Objekte) des technischen Systems auswählen und diese hinzufügen zu können. Ferner besteht bei derartigen Entwicklungswerkzeugen die Möglichkeit, eine technische Komponente zu konfigurieren, zum Beispiel die für eine Kommunikation in einem Kommunikationsnetzwerk erforderlichen Parameter anzugeben, ein bestimmtes Modell auszuwählen, bestimmte Eigenschaften zu aktivieren oder zu deaktivieren, eine Leistungsklasse oder einen Leistungsbedarf anzugeben usw.. Derartige Entwicklungswerkzeuge kommen beispielweise im Bereich der Automatisierungstechnik, bei Produktions- oder Werkzeugmaschinen, bei Diagnose- oder Serviceunterstützungssystemen sowie gegebenenfalls bei einer Bedienung und Wartung komplexer Komponenten, Geräte und Systeme, insbesondere industrieller oder medizinischer Anlagen, zum Einsatz.

Während der Erzeugung des Modells des technischen Systems durch den Systementwickler tritt häufig der Fall auf, dass Designentscheidungen revidiert werden, z.B. eine zu dem technischen System hinzugefügte technische Komponente sich als für einen beabsichtigen Zweck nicht richtige oder geeignete Komponente herausstellt. In diesem Fall kann der Systementwickler die vorangegangenen Konfigurationsschritte bis zum Hinzufügen dieser Komponente rückgängig machen und stattdessen eine andere, besser geeignete Komponente zum technischen System hinzufügen. Sämtliche vorangegangene Eingaben, die nach dem Hinzufügen der ausgetauschten Komponente gemacht wurden, sind jedoch verloren. Dies bedeutet, der Systementwickler muss zum Beispiel sämtliche Konfigurationen der alternativ ausgewählten technischen Komponente erneut vornehmen, was einigen Aufwand bedeuten kann. Ist der für die Wiederholung zuvor gemachter Konfigurationsschritte erforderliche Aufwand zu groß, wird daher bei der Modellierung des technischen Systems oftmals eine an sich ungeeignete technische Lösung belassen.

Es ist Aufgabe der Erfindung, ein Verfahren und einen Rechner für die rechnergestützte Interaktion eines Bedieners mit einem auf dem Rechner ausgeführten Entwicklungswerkzeug anzugeben, mit dem die Erzeugung eines Modells eines technischen Systems funktionell vereinfacht wird.

Diese Aufgaben werden gelöst durch ein Verfahren gemäß den Merkmalen des Anspruchs 1, ein Computerprogrammprodukt gemäß den Merkmalen des Anspruchs 12 und einen Rechner gemäß den Merkmalen des Anspruchs 13. Vorteilhafte Ausgestaltungen ergeben sich aus den abhängigen Ansprüchen.

Gemäß einem ersten Aspekt wird ein Verfahren zur rechnergestützten Interaktion eines Bedieners mit einem auf einem Rechner ausgeführten Entwicklungswerkzeug vorgeschlagen, mit dem ein Modell eines technischen Systems erzeugt und/oder konfiguriert werden kann. Das Verfahren umfasst den Schritt des Verarbeitens einer Anzahl an aufeinanderfolgenden Eingaben, die an einer Bedienerschnittstelle des Rechners empfangen werden, zur Konfiguration zumindest eines Objekts des technischen Systems. Weiter umfasst das Verfahren den Schritt des Erzeugens einer Eingabekontextinformation für die aufeinanderfolgenden Eingaben sowie des Speicherns der Eingabekontextinformationen in einer Historie, wobei die Eingabekontextinformationen in der Historie in der Reihenfolge des Empfangs an der Bedienerschnittstelle vorliegen. Als Eingabekontextinformation werden für die Anzahl an Eingaben jeweils eine Aktion der Eingabe, die einen zur Konfiguration des Objekts erforderlichen Schritt umfasst, und ein Ziel der Aktion, das zumindest einen Parameter der Aktion umfasst, gespeichert.

Im Gegensatz zu dem aus dem Stand der Technik bekannten Vorgehen werden zur Erstellung einer Historie nicht die in den Eingaben enthaltenen inhaltlichen Daten, wie zum Beispiel Konfigurationsdaten und/oder -parameter, gespeichert, sondern die durch eine Eingabe beabsichtigte Wirkung. Die Wirkung ist ausgedrückt durch die erzeugte Eingabekontextinformation, die eine Aktion und ein Ziel der Aktion umfasst. Die Aktion umfasst einen zur Konfiguration des Objekts erforderlichen Schritt, zum Beispiel das Hinzufügen eines Objekts, die Zuweisung eines Namens zu dem Objekt, die Zuweisung einer Kommunikations-Adresse zu dem neuen Objekt und dergleichen. Die Aktion umfasst somit im Wesentlichen den im Rahmen der Konfiguration durchzuführenden Befehl, nämlich das Hinzufügen einer Komponente, die Namensvergabe und dergleichen. Das Ziel der Aktion umfasst zumindest einen Parameter der Aktion, zum Beispiel welche Art und/oder welcher Typ an Objekt zu dem technischen System hinzugefügt werden soll. Das Ziel der Aktion kann beispielsweise die Leistungsklasse eines Motors beschreiben, während die Aktion das Hinzufügen des Motors umfasst. Infolge der Namensvergabe wäre das Ziel der Aktion der zu vergebende Name. Soll als Aktion eine Kommunikations-Adresse vergeben werden, so umfasst das Ziel der Aktion die konkrete Adresse.

Durch das Speichern von kontextbezogenen Informationen anstelle der konkreten in einer Eingabe enthaltenen Informationen erhöht sich die Flexibilität bei der Erzeugung und/oder Konfiguration des Modells des technischen Systems. Dieses Vorgehen kann insbesondere bei den in dem Entwicklungswerkzeug verwendeten Funktionen des Rückgängigmachens (sog. "Undo") und Wiederherstellens (sog. "Redo") vorteilhaft zum Einsatz gelangen, da die in einer Historie gespeicherten Daten für den Schritt des Wiederherstellens in inhaltlicher Sicht nicht erforderlich sind. Anhand der Kontextinformation ist es bei einem Wiederherstellen dem Rechner möglich, die zur Durchführung einer wiederherzustellenden Aktion erforderlichen spezifischen Konfigurationsparameter selbständig zu ermitteln.

Eine zweckmäßige Ausgestaltung des Verfahrens sieht vor, dass beim Empfang einer oder mehrerer aufeinanderfolgender Eingaben an der Bedienerschnittstelle, die das Rückgängigmachen (Undo) einer oder mehrerer vorhergehender Aktionen umfassen, die zu den Eingaben zugehörigen Eingabekontextinformationen in der Historie weiter gespeichert bleiben. Wie beschrieben, ermöglicht die Speicherung der Eingabekontextinformationen auch im Falle des Rückgängigmachens einer oder mehrerer Aktionen, die Nutzung für die Konfiguration eines anderen Objekts mit anderen spezifischen Konfigurationseigenschaften.

Eine weitere zweckmäßige Ausgestaltung sieht vor, dass in der Eingabekontextinformation keine für die Erreichung des Ziels der Aktion erforderlichen Daten und/oder Schritte gespeichert werden, wie dies bei den im Stand der Technik bekannten Entwicklungswerkzeugen der Fall ist.

In einer alternativen Ausgestaltung können für die aufeinanderfolgenden Eingaben zusätzlich zu den Eingabekontextinformationen die an der Bedienerschnittstelle empfangenen Konfigurationsdaten einer jeweiligen Eingabe gespeichert werden. Diese können dann im Falle des Rückgängigmachens einer oder mehrerer Aktionen in der Historie weiter gespeichert bleiben oder im Rahmen des Rückgängigmachens gelöscht werden. Diese Ausgestaltung kann die Effizienz des Betriebs des Entwicklungswerkzeugs erhöhen, zum Beispiel in einem Fall, in dem ein Objekt nach dem Rückgängigmachen einer oder mehrere Aktionen durch ein anderes Objekt vom gleichen Typ ausgetauscht wird. In diesem Fall kann die Konfiguration des durch ein Wiederherstellen erzeugten anderen Objekts, da die Objekte vom gleichen Typ sind, mit den Daten des durch Rückgängigmachung gelöschten Objekts erfolgen, so dass Konfigurationsdaten für das andere Objekt durch den Rechner nicht ermittelt werden brauchen.

Eine weitere Ausgestaltung sieht vor, dass eine aus der Historie ermittelte Aktionsliste über die Bedienerschnittstelle zur Bearbeitung und/oder Auswahl einer Aktion durch den Benutzer ausgegeben wird, wobei die Aktionsliste die in der Historie in den Eingabekontextinformationen enthaltenen Aktionen in der Reihenfolge des Empfangs an der Bedienerschnittstelle umfasst. Eine solche Aktionsliste kann beispielsweise eine Anzahl an Aktionen umfassen, welche für die Konfiguration eines bestimmten Objekts des technischen Systems erforderlich sind. Beispielsweise können die Aktionen die Vergabe eines oder mehrerer Namen und die Vergabe einer oder mehrerer Kommunikationsadressen umfassen. Um dem Bediener des Entwicklungswerkzeugs das von diesem gewählte Vorgehen besser nachvollziehbar zu machen, kann die automatisiert verarbeitbare oder verarbeitete Aktionsliste über die Bedienerschnittstelle ausgegeben werden. Die Aktionsliste ist dann durch den Bediener einsehbar und/oder bearbeitbar, wobei insbesondere eine Veränderung der Reihenfolge von Aktionen vorgesehen sein kann. Alternativ oder zusätzlich können auch frühere Eingabekontextinformationen durch den Bediener gelöscht werden, zum Beispiel bis zu einer bestimmten, vom Bediener auswählbaren Eingabekontextinformation. Hierdurch kann der Bediener wählen, welche Aktionen er manuell konfigurieren möchte und welche Aktionen durch das Entwicklungswerkzeug rechnergestützt automatisiert vorgenommen werden sollen.

Es kann weiterhin vorgesehen sein, dass bei der Verarbeitung einer Eingabe überprüft wird, ob die in der zugeordneten Eingabekontextinformation enthaltene Aktion eine Aktion der Aktionsliste ist, wobei im positiven Fall die weiteren in dieser Aktionsliste enthaltenen Aktionen in der in der Aktionsliste enthaltenen Reihenfolge ausgeführt werden, wobei die den Aktionen zugeordneten Ziele für das in der Eingabe enthaltene Objekt aus einer semantischen Beschreibung ausgelesen und/oder an das Objekt angepasst werden. Die semantische Beschreibung muss für die in das technische System zu integrierenden Objekte einmalig vorab erstellt werden. In der semantischen Beschreibung wird für ein jeweiliges Objekt die Bedeutung eines Datenfeldes, wie dieses für das Objekt verwendet wird, in Bezug auf eine allgemeine Feldbezeichnung vorgenommen. Die semantische Beschreibung stellt damit eine Abbildung zwischen den von dem Bediener verwendeten Bezeichnungen von Datenfeldern und den von dem Rechner verwendeten Bezeichnungen her. Typischerweise wird eine derartige semantische Beschreibung von den Herstellern der Objekte bereitgestellt. So kann zum Beispiel die semantische Beschreibung die Information enthalten, dass bei einem Objekt ein Parameter "Gerätename" denselben Zweck hat wie ein Parameter "Gerätebezeichnung" bei einem anderen Objekt.

Eine weitere Ausgestaltung sieht vor, dass in der Aktionsliste in Bezug auf die Erzeugung und/oder Konfiguration eines Objekts zusammengehörende Aktionen zu einer oder mehreren Gruppen zusammengefasst werden. Die Zusammenfassung mehrerer Aktionen zu einer bestimmten Gruppe kann durch den Bediener vorgenommen werden. Hierdurch wird es möglich, eine Gruppe von zusammengehörenden Aktionen, zum Beispiel durch ein Makro oder eine Makroaufzeichnung automatisiert ablaufen zu lassen, so dass die einzelnen Aktionen nicht durch den Benutzer manuell aufgerufen werden müssen.

Es ist weiterhin zweckmäßig, wenn bei der Verarbeitung einer Eingabe überprüft wird, ob die in der zugeordneten Eingabekontextinformation enthaltene Aktion eine, in der Reihenfolge erste, Aktion einer der Gruppen ist.

Im positiven Fall werden die weiteren in dieser Gruppe enthaltenen Aktionen in der in dieser Gruppe enthaltenen Reihenfolge ausgeführt, wobei die den Aktionen zugeordneten Ziele für das in der Eingabe enthaltene Objekt aus einer semantischen Beschreibung ausgelesen und/oder an das Objekt angepasst werden. Hierdurch kann ein zumindest teilweiser automatisierter Ablauf bei der Konfiguration eines in das technische System zu integrierenden und/oder zu konfigurierenden Objekts erfolgen.

In einer alternativen Ausgestaltung kann im positiven Fall über die Bedienerschnittstelle eine Eingabemaske ausgegeben werden, in der der Bediener auswählen kann, ob die weiteren in dieser Gruppe enthaltenen Aktionen in der in dieser Gruppe enthaltenen Reihenfolge ausgeführt werden sollen oder nicht. Bei dieser Variante wird der Bediener des Entwicklungswerkzeugs dadurch unterstützt, dass eine von ihm gemachte Eingabe daraufhin überprüft wird, ob hierzu zugehörige Folge-Aktionen vorliegen. Dem Bediener steht es dann frei, lediglich einzelne oder alle der Aktionen automatisiert durch das Entwicklungswerkzeug des Rechners durchführen zu lassen.

Eine weitere zweckmäßige Ausgestaltung sieht vor, dass bei der Verarbeitung der semantischen Beschreibung und/oder der Anpassung an das Objekt eine Konfliktprüfung durchgeführt wird, in der überprüft wird, ob für das in der Eingabe enthaltene Objekt eine semantische Beschreibung existiert und/oder ob eine Anpassung an das Objekt möglich ist, wobei im Falle eines festgestellten Konflikts über die Bedienerschnittstelle eine Warninformation und/oder eine Eingabemaske zur Eingabe benötigter Informationen, insbesondere Parameter, durch den Benutzer ausgegeben wird. Durch die Konfliktprüfung wird sichergestellt, dass bei der Feststellung, dass in der semantischen Beschreibung keine für das zu konfigurierende Objekt erforderlichen Informationen vorliegen, der Bediener eine Warnung erhält. Daraufhin kann der Bediener die erforderlichen Konfigurationsinformation manuell eintragen. Gegebenenfalls kann der Bediener auch die semantische Beschreibung anpassen, um den aufgetretenen Konflikt in der Zukunft vermeiden zu können.

Gemäß einem zweiten Aspekt wird ein Computerprogrammprodukt vorgeschlagen, dass direkt in den internen Speicher eines digitalen Rechners geladen werden kann und Softwarecodeabschnitte umfasst, mit denen die Schritte des hierin beschriebenen Verfahrens ausgeführt werden, wenn das Produkt auf dem Rechner läuft. Das Computerprogrammprodukt kann in der Gestalt eines physikalischen Datenträgers, zum Beispiel einer DVD, einer CD-ROM, eines USB-Speichersticks oder einer Speicherkarte verkörpert sein. Das Computerprogrammprodukt kann auch als ein über ein leitungsgebundenes oder kabelloses Übertragungsnetz ladbares Signal vorliegen.

Gemäß einem dritten Aspekt der vorliegenden Erfindung wird ein Rechner zur rechnergestützten Interaktion eines Bedieners mit einem auf dem Rechner ausgeführten Entwicklungswerkzeug, mit dem ein Modell eines technischen Systems erzeugt und/oder konfiguriert werden kann, vorgeschlagen. Der Rechner umfasst eine Recheneinheit, eine Bedienerschnittstelle und einen Speicher. Der Rechner bzw. die Recheneinheit ist dazu eingerichtet, eine Anzahl an aufeinanderfolgenden Eingaben, die an der Bedienerschnittstelle empfangen werden, zur Konfiguration zumindest eines Objekts des technischen Systems zu verarbeiten, sowie eine Eingabekontextinformation für die aufeinanderfolgenden Eingaben zu erzeugen und die Eingabekontextinformationen in einer Historie in dem Speicher zu speichern, wobei die Eingabekontextinformationen in der Historie in der Reihenfolge des Empfangs an der Bedienerschnittstelle vorliegen. Weiter ist der Rechner bzw. die Recheneinheit dazu eingerichtet, als Eingabekontextinformationen für die Anzahl an Eingaben jeweils eine Aktion der Eingabe, die einen zur Konfiguration des Objekts erforderlichen Schritt umfasst, und ein Ziel der Aktion, das zumindest einen Parameter der Aktion umfasst, zu speichern.

Der Rechner weist die gleichen Vorteile auf, wie diese vorstehend in Verbindung mit dem erfindungsgemäßen Verfahren beschrieben wurden.

In weiteren zweckmäßigen Ausgestaltungen ist der Rechner bzw. die Recheneinheit dazu eingerichtet, die weiteren Schritte des hierin beschriebenen Verfahrens durchzuführen.

Die Erfindung wird nachfolgend näher anhand eines Ausführungsbeispiels in der Zeichnung erläutert. Es zeigen:
- Fig. 1: eine schematische Darstellung eines erfindungsgemäßen Rechners zur rechnergestützten Interaktion eines Bedieners mit einem auf dem Rechner ausgeführten Entwicklungswerkzeug;
- Fig. 2: eine schematische Darstellung der Erzeugung und Speicherung von aus Eingaben erzeugten Eingabekontextinformationen; und
- Fig. 3: eine schematische Darstellung des zeitlichen Ablaufs der Veränderung einer Aktionsliste.

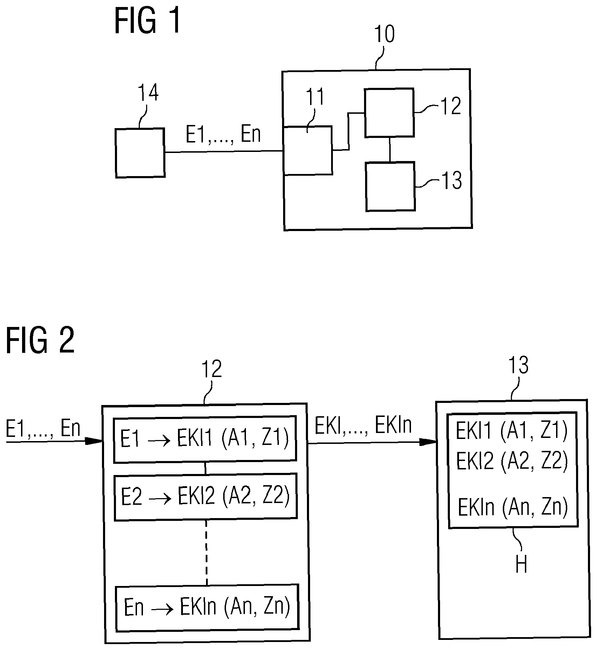

Fig. 1 zeigt eine schematische Darstellung eines Rechners 10 zur rechnergestützten Interaktion eines Bedieners mit einem auf dem Rechner 10 ausgeführten Entwicklungswerkzeug. Der Rechner 10 umfasst eine Bedienerschnittstelle 11, über die der Rechner 10 Eingaben E1,...,En, die von dem Bediener an einem Ein-/Ausgabemittel 14 gemacht werden, empfängt. Die an der Bedienerschnittstelle 11 empfangenen Eingaben E1,...,En werden an eine Recheneinheit 12 zur Verarbeitung weitergeleitet. Die Recheneinheit 12 führt ein oder mehrere Programme des Entwicklungswerkzeuges aus, das beispielsweise in einem Speicher 13 des Rechners 10 hinterlegt ist. Neben den in Fig. 1 dargestellten Komponenten kann der Rechner 10 optional weiter Komponenten, wie zum Beispiel weitere Speicher, Kommunikationsschnittstellen und dergleichen umfassen.

Mithilfe des Entwicklungswerkzeuges kann ein Modell eines technischen Systems erzeugt und/oder konfiguriert werden. Bei dem technischen System kann es sich um ein technisches System im Bereich der Automatisierungstechnik handeln. Grundsätzlich ist die Verwendung des erfindungsgemäßen Verfahrens und des zughörigen Rechners jedoch nicht auf Automatisierungssysteme beschränkt. Allgemein handelt es sich bei dem technischen System um ein System, das eine Vielzahl an technischen Komponenten umfasst, die zur Erfüllung ihres angedachten Zwecks in geeigneter Weise konfiguriert werden müssen. Das Hinzufügen, das Erstellen von Beziehungen zwischen technischen Komponenten, die Objekte im Sinne dieser Erfindung darstellen, die Konfiguration der technischen Komponenten im Hinblick auf zu erfüllende Paramater und/oder Kommunikationseigenschaften, werden mithilfe des bereits erwähnte Entwicklungswerkzeugs vorgenommen. Das Hinzufügen und Konfigurieren eines neuen Objekts erfordert in der Regel eine Mehrzahl an Aktionen.

Aktionen umfassen einen jeweiligen zur Konfiguration des Objekts erforderlichen Schritt. Eine erste Aktion umfasst beispielsweise das Hinzufügen eines Objekts. Eine nächste Aktion umfasst z.B. die Zuweisung eines Namens. Eine darauffolgende Aktion umfasst z.B. das Zuweisen einer IP-Adresse. Abhängig von dem Objekt können weitere Aktionen zu dessen Konfiguration vorgesehen sein. Die von einem Benutzer vorgenommenen Aktionen werden durch das Entwicklungswerkzeug üblicherweise protokolliert. Herkömmlicherweise geschieht dies dadurch, dass neben der durchgeführten Aktion auch die in der Aktion umfassten Inhalte in einer Historienliste gespeichert werden. Stellt sich nun heraus, dass das zu dem technischen System hinzugefügte Objekt nicht geeignet ist, zum Beispiel weil dies den Anforderungen an ein bestimmtes Kriterium nicht genügt, kann der Bediener durch ein Rückgängig-Werkzeug des Entwicklungstools, das als Undo bezeichnet wird, die Aktionen Schritt für Schritt rückgängig machen, bis auch das Hinzufügen des irrtümlicherweise zum technischen System hinzugefügten Objekts rückgängig gemacht ist. Anschließend kann der Bediener ein besser geeignetes Objekt hinzufügen und die oben erwähnten Aktionen in der der entsprechenden Reihenfolge wieder durchführen, wobei mit jeder Aktion auch die entsprechenden Konfigurationsparameter erneut angegeben werden müssen. Abhängig von dem zu konfigurierenden Objekt kann dies sehr aufwendig sein. Das Undo/Redo muss nicht notwendigerweise schrittweise erfolgen. Alternativ kann eine Eingabe E1 in der Aktionsliste geändert werden, ohne nachfolgende Eingaben rückgängig zu machen. Dies wird weiter unten beschrieben.

Die Erfindung schlägt daher ein hiervon abgewandeltes Vorgehen vor, das schematisch in Fig. 2 gezeigt ist. Dabei werden die an der Bedienerschnittstelle des Rechners 10 empfangenen Eingaben E1,...,En, welche eine jeweilige Aktion und gegebenenfalls weitere Paramater umfassen, durch die Recheneinheit 12 verarbeitet. Für jede der aufeinanderfolgenden Eingaben E1,...,En wird eine Eingabekontextinformation EKI1,..., EKIn erzeugt, wie Fig. 2 im Block 12 für die Eingaben E1,...,En andeutet. Die Eingabekontextinformationen EKI1,..., EKIn werden in einer Historie H, die in dem Speicher 13 des Rechners 10 gespeichert wird, hinterlegt (Block 13 in Fig. 2). Die Eingabekontextinformationen EKI1,..., EKIn in der Historie H liegen dabei in der Reihenfolge des Empfangs an der Bedienerschnittstelle 11 vor.

Die die Eingaben EKI1,...,EKIn empfangende Recheneinheit 12 extrahiert somit aus jeder Eingabe E1,...,En eine jeweilige Eingabekontextinformation EKI1,...,EKIn. Jede der Eingabekontextinformation EKI1,...,EKIn umfasst jeweils eine Aktion A1,...,An und ein Ziel Z1,...,Zn. Jede Aktion A1,...,An umfasst einen zur Konfiguration des Objekts erforderlichen Schritt. Das Ziel Z1,...,Zn der Aktion umfasst zumindest einen Parameter der betreffenden Aktion A1,...,An. Das Ziel Z1,...,Zn repräsentiert damit eine durch die Aktion hervorgerufenen Effekt.

Stellt die Aktion A1 beispielsweise das Hinzufügen eines Objektes dar, so umfasst das Ziel Z1 die Information um welche Art und/oder um welchen Typ es sich bei dem hinzugefügten Objekt handelt. In einer optionalen Ausgestaltung kann zusätzlich in jeder Eingabekontextinformation zur Aktion A und dem Ziel Z auch das jeweilige Inhaltsdatum gespeichert werden, z.B. die genaue Bezeichnung "Siemens XYZ". Handelt es sich bei der Eingabe E2 um die Vergabe eines Namens für das mit Eingabe E1 hinzugefügte Objekt, so wird als Aktion A2 das Setzen des Namens und als Ziel Z2 der zu vergebende Name gespeichert. Wird in Schritt E3 eine IP-Adresse zugewiesen, so wird als Aktion A3 die Vergabe einer IP-Adresse und als Ziel Z3 die zu vergebenden IP-Adresse gespeichert.

Die Folge an Eingabekontextinformationen EKI1,...,EKIn wird dann in der Historie H in dem Speicher 14, wie in Fig. 2 dargestellt, hinterlegt. In der Historie H liegen die Eingabekontextinformationen dabei in der Reihenfolge des Empfangs an der Bedienerschnittstelle 11 vor.

Eine beispielhafte Reihenfolge an Aktionen A1 bis A8 für das Hinzufügen und Konfigurieren eines Objekts des technischen Systems könnte wie folgt sein:
A1. Insert PLC
A2. Set PLC name
A3. Assign PN name
A4. Assign IP address
A5. Add CP
A6. Set CP name
A7. Add CP
A8. Set CP name.

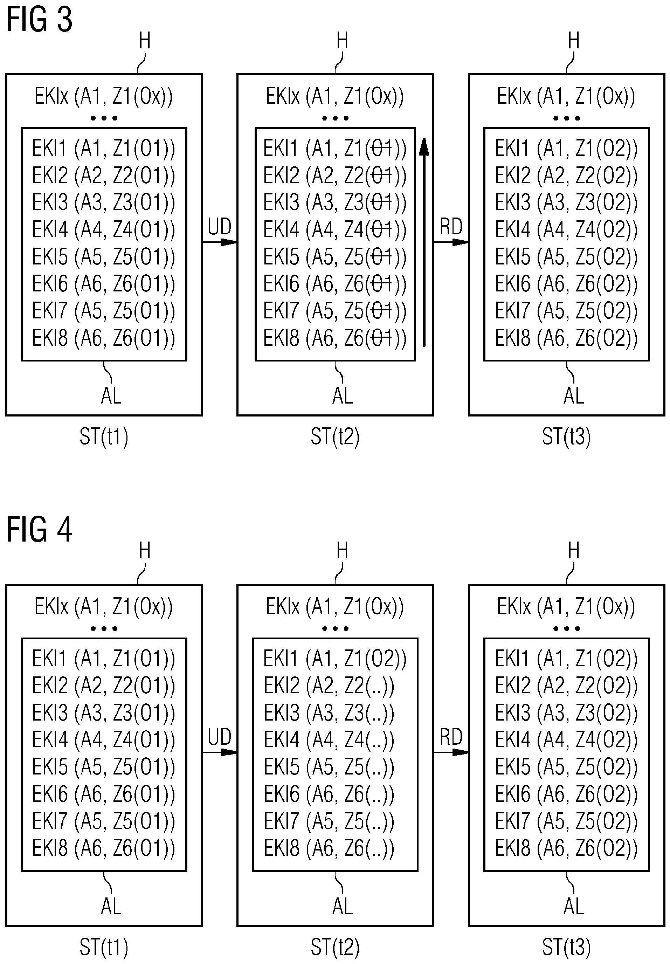

Während die oben stehende Aktionsliste AL, die aus der Historie H extrahiert werden kann, somit die Aktionen A1,...,A8 sowie die nicht dargestellten Ziele Z1,...,Z8 umfasst, enthält die Aktionsliste AL keine Information darüber, wie für die Konfiguration Daten im Einzelnen verändert werden müssen. Es wird somit lediglich das Ergebnis oder der Effekt mit allen Eigenschaften gespeichert, um bei der erneuten Abarbeitung der Aktionsliste AL für ein anderes Objekt (z.B. eines anderen Typs) die gewünschten Eigenschaften zu erzielen. Dies wird exemplarisch anhand der zeitlichen Abfolgen in Fig. 3 näher erläutert.

Fig. 3 zeigt drei verschieden Zustände ST zu aufeinanderfolgenden Zeitpunkten t₁, t₂ und t₃ (in der Figur in der abgekürzten Schreibweise ST(t₁), ST(t₂) und ST(t₃) dargestellt). Zum Zeitpunkt t₁ umfasst die Historie H eine Vielzahl an Eingabekontextinformationen EKIx für Objekte Ox sowie die im Besonderen interessierenden Eingabekontextinformationen EKI1,...,EKI8 der zuvor beschriebenen Aktionsliste AL für ein Objekt O1. Die oberhalb der Aktionsliste AL stehenden Eingabekontextinformationen EKIx (wobei x eine beliebig große Anzahl an Eingabekontextinformationen umfassen kann) sind für diese Beispiel nicht mehr interessierende Konfigurationen.

Im Folgenden wird davon ausgegangen, dass das Hinzufügen des Objekts O1 mittels der Eingabe E1 und die in der Folge vorgenommenen Konfigurationen mit den Eingaben E2 bis E8 rückgängig gemacht werden sollen (Siehe ST(t₂)). Der Bediener kann über die Funktion Undo UD, beginnend mit der Eingabe E8, in entgegengesetzter Reichenfolge zur Erstellung sämtliche Eingaben (nicht jedoch die dazugehörigen Eingabekontextinformationen EKI1,...,EKI8) bis zur Eingabe E1 rückgängig machen. Dies ist durch das Durchstreichen des Objekts O1 im Zustand ST zum Zeitpunkt t₂ symbolisiert. Der daneben nach oben gerichtete Pfeil symbolisiert das von der Eingabe E8 in aufsteigender Abfolge vorgenommene Rückgängigmachen (Undo).

Statt des Objekts O1 soll nun ein Objekt O2 hinzugefügt werden, das beispielsweise einer anderen Leistungsklasse, aber ansonsten dem gleichen Typ des Objekts O1 entspricht. Dies bedeutet, die in den Eingaben E2 bis E8 vorgenommenen Konfigurationsschritte können in identischer Weise auf das Objekt 2 angewandt werden. Da das Objekt O2 gegebenenfalls zu seiner Konfiguration andere Feldbezeichnungen und/oder Speicherorte in seinem Datenmodell verwendet, werden zur automatischen oder teilautomatischen Anwendung der in den Eingabekontextinformationen EKI2,...,EKI8 enthaltenen Aktionen A2,...,A6 und Ziele Z2(O2),...,Z6(O2) die entsprechenden Informationen aus einer semantischen Beschreibung ausgelesen und auf das Datenmodell des Objekts O2 angewendet. Mit jeder durchgeführten Aktion wird wiederum in zuvor beschriebener Weise die Eingabekontextinformationen EKI1,...,EKI8 erzeugt und zusammen mit der darin enthaltenen Aktion A1,...,A6 und Ziel Z1(O2),...,Z6(O2) in der Historienliste gespeichert (Siehe ST(t₃)).

Alternativ kann eine Eingabe E1 in der Aktionsliste geändert werden, ohne die Eingaben E2 bis E8 rückgängig zu machen. Fig.4 zeigt, dass in Schritt t2 die Aktion A1 geändert wurde, indem Objekt O1 durch O2 getauscht wurde. Dadurch können die nachfolgenden Aktionen nicht mehr auf Objekt O1 durchgeführt werden, was durch ".." ausgedrückt werden soll. Analog wie oben beschrieben werden zur automatischen oder teilautomatischen Anwendung der in den Eingabekontextinformationen EKI2,...,EKI8 enthaltenen Aktionen A2,...,A6 und Ziele Z2(O2),...,Z6(O2) die entsprechenden Informationen aus einer semantischen Beschreibung ausgelesen und auf das Datenmodell des Objekts O2 angewendet.

Die automatische oder teilautomatische Konfiguration des neuen Objekts O2 wird dadurch möglich, dass das Rückgängigmachen UD einer oder mehrerer vorhergehender Aktionen nicht zu einem Verwerfen der zugehörigen Eingabekontextinformationen EKI1,...,EKI8 in der Historie H geführt hat. Um dem Bediener eine Kontrolle über den Vorgang des Konfigurierens des neuen Objekts O2 zu ermöglichen, können die in der Aktionsliste AL enthaltenen Information über das Ein-/Ausgabemittel 14 ausgegeben werden, so dass der Bediener auswählen kann, welche der Aktionen auf das neu hinzuzufügende Objekt O2 angewendet werden sollen.

Die aus der Historie H ermittelte Aktionsliste AL kann, wie beschrieben, über die Benutzerschnittstelle 11 zur Bearbeitung und/oder gezielten Ausfall einer oder mehrerer Aktionen A1,...,An durch den Benutzer ausgegeben werden. Das Bearbeiten umfasst beispielsweise eine Veränderung der Reihenfolge der in der Aktionsliste AL enthaltenen Aktionen. Ebenso kann eine Veränderung der Aktionen und/oder der Ziele der Aktionen durch den Benutzer erfolgen.

Dem Bediener kann bei der Nutzung des Entwicklungswerkzeugs dadurch unterstützt werden, dass bei der Verarbeitung einer Eingabe E1,...,En durch die Recheneinheit 12 überprüft wird, ob die in der der Eingabe zugeordneten Eingabekontextinformationen EKI1,...,EKIn enthaltene Aktion A1,...,An eine Aktion der Aktionsliste AL ist. Im positiven Fall können die weiteren in dieser Aktionsliste enthaltenen Aktionen in der in der Aktionsliste AL enthaltenen Reihenfolge automatisch ausgeführt werden. Wie beschrieben werden dabei die den Aktionen zugeordneten Ziele Z1,...,Zn für das in der Eingabe E1,...,En enthaltene Objekt O1 bzw. O2 aus einer semantischen Beschreibung (nicht dargestellt) ausgelesen und/oder an das in der Eingabe referenzierte Objekt angepasst.

Weiterhin ist es möglich, in der Aktionsliste AL enthaltene Aktionen in Bezug auf die Erzeugung und/oder Konfiguration eines Objekts zusammengehörende Aktionen zu einer oder mehreren Gruppen zusammenzufassen. Während die oben exemplarisch dargestellte Aktionsliste AL bereits als Gruppe betrachtet werden kann, können beispielsweise die Aktionen A1 bis A4 als Gruppe betrachtet werden, da diese Schritte grundsätzlich bei der Hinzufügung eines jedweden Objektes zu dem technischen System erforderlich sind. Die Gruppe oder Gruppen können z.B. als Makro beim Hinzufügen eines neuen Objekts gespeichert werden, was den Bediener bei der Konfiguration entlastet.

Das Zusammenfassen zu Gruppen kann durch einen Bediener oder automatisiert durch die Recheneinheit 12 erfolgen. Die Gruppen können dazu genutzt werden, bei der Verarbeitung einer Eingabe E1,...,En zu überprüfen, ob die in der zugeordneten Eingabekontextinformation enthaltene Aktion eine, in der Reihenfolge erste, Aktion einer der Gruppen ist. Ist dies der Fall, so können die weiteren in dieser Gruppe enthaltenen Aktionen in der in dieser Gruppe enthaltenen Reihenfolge ausgeführt werden. Die den Aktionen zugeordneten Ziele werden dann für das in der Eingabe enthaltene Objekt aus der semantischen Beschreibung ausgelesen und/oder an das Objekt angepasst. Alternativ kann im positiven Fall über die Bedienerschnittstelle 11 eine Eingabemaske für den Bediener ausgegeben werden, in der der Bediener auswählen kann, ob die weiteren in dieser Gruppe enthaltenen Aktionen in dieser Gruppe enthaltenen Reihenfolge ausgeführt werden sollen oder nicht. Die Auswahl kann optional für jede einzelne Aktion getrennt erfolgen.

Bei der Anpassung der den Aktionen zugeordneten Ziele für das in der Eingabe enthaltene Objekt aus der semantischen Beschreibung kann es vorkommen, dass ein Konflikt vorliegt. Beispielsweise kann für das in der Eingabe enthaltene Objekt keine semantische Beschreibung existieren. Ebenso kann, zum Beispiel mangels semantischer Beschreibung, eine Anpassung der semantischen Beschreibung an das Objekt nicht möglich sein. Im Falle eines festgestellten Konflikts wird dann über die Bedienerschnittstelle 11 auf dem Ein-/Ausgabemittel 14 eine Warninformation ausgegeben. Alternativ oder zusätzlich kann eine Eingabemaske zur Eingabe benötigter Informationen durch den Benutzer ausgegeben werden. Benötigte Informationen können beispielsweise Paramater und dergleichen sein. Bei der Eingabe dieser Parameter können die entsprechenden Informationen erfasst und gegebenenfalls automatisiert zu der semantischen Beschreibung, die in dem Speicher 13 des Rechners 10 hinterlegt ist, hinzugefügt werden.

Um die in der Historie H enthaltenen Aktionen zu reduzieren, kann zudem vorgesehen sein, diese als Aktionsliste AL über die Benutzerschnittstelle 11 auszugeben und dem Benutzer zur Auswahl zu geben, welche der Aktionen in der Historie H gelöscht werden sollen oder können.

Ferner kann ein Schnappschuss (snapshot) der mit einer Eingabe gemachten Objektdaten erfolgen, wobei die Objektdaten zusätzlich zu den Aktionen und Zielen in der Historie gespeichert werden. Dies kann helfen, spätere Konfigurationen beschleunigt durchzuführen.

Das vorgeschlagene Verfahren basiert somit auf der Idee, eine Historie von benutzerseitig durchgeführten Aktionen dadurch zu erzeugen, dass nicht der genaue Inhalt der Eingaben, sondern der durch die Eingaben bezweckte Effekt in Bezug auf eine Aktion zusammen mit dieser gespeichert wird. Diese Ziele sind nicht notwendigerweise identisch mit den durch den Benutzer gemachten Eingabe, da der Effekt durch das mit der Eingabe beeinflusste Objekt anhand des zugrunde liegenden Objektmodells verändert werden könnte. Der Vorteil besteht darin, dass der Effekt wiederholt für ähnliche Klassen des Objekts durchgeführt werden kann und nicht nur auf eine bestimmte, gleiche Instanz, das mit der zuvor vorgenommenen Eingabe konfiguriert wird. [Sehr sehr gute Zusammenfassung!]

### Bezugszeichenliste

- 10: Rechner (10)
- 11: Bedienerschnittstelle
- 12: Recheneinheit
- 13: Speicher
- 14: Ein-/Ausgabemittel
- E1,...En: Eingabe (E1,....,En)
- EKI1,..., EKIn: Eingabekontextinformation
- O1, O2: Objekt
- A1,...,An: Aktion
- Z1,...,Zn: Ziel der Aktion
- H: Historie
- AL: Aktionsliste
- UD: Schritt des Rückgängigmachens (Undo)
- RD: Schritt des Wiederholens (Redo)

## Patentansprüche

1. Verfahren zur rechnergestützten Interaktion eines Bedieners mit einem auf einem Rechner (10) ausgeführten Entwicklungswerkzeug, mit dem ein Modell eines technischen Systems erzeugt und/oder konfiguriert werden kann, umfassend die Schritte:
- Verarbeiten einer Anzahl an aufeinanderfolgenden Eingaben (E1,...,En), die an einer Bedienerschnittstelle (11) des Rechners (10) empfangen werden, zur Konfiguration zumindest eines Objekts (O1, O2) des technischen Systems;
- Erzeugen einer Eingabekontextinformation (EKI1,...,EKIn) für die aufeinanderfolgenden Eingaben (E1,....,En) und Speichern der Eingabekontextinformationen (EKI1,...,EKIn) in einer Historie (H), wobei die Eingabekontextinformationen (EKI1,...,EKIn) in der Historie (H) in der Reihenfolge des Empfangs an der Bedienerschnittstelle (11) vorliegen;
- wobei als Eingabekontextinformation (EKI1,...,EKIn) für die Anzahl an Eingaben (E1,....,En) jeweils eine Aktion (A1,...,An) der Eingabe (E1,...,En), die einen zur Konfiguration des Objekts (O1, O2) erforderlichen Schritt umfasst, und ein Ziel (Z1,...,Zn) der Aktion, das zumindest einen Parameter der Aktion (A1,...,An) umfasst, gespeichert werden.

2. Verfahren nach Anspruch 1, bei dem beim Empfang einer oder mehrerer aufeinanderfolgender Eingaben (E1,....,En) an der Bedienerschnittstelle (11), die das Rückgängigmachen (UD) einer oder mehrerer vorhergehender Aktionen (A1,...,An) umfassen, die zu den Eingaben (E1,....,En) zugehörigen Eingabekontextinformationen (EKI1,...,EKIn) in der Historie (H) weiter gespeichert bleiben.

3. Verfahren nach Anspruch 1 oder 2, bei dem in der Eingabekontextinformation (EKI1,...,EKIn) keine für die Erreichung des Ziels (Z1,...,Zn) der Aktion erforderlichen Daten und/oder Schritte gespeichert werden.

4. Verfahren nach Anspruch 1 oder 2, bei dem für die aufeinanderfolgenden Eingaben (E1,....,En) zusätzlich zu den Eingabekontextinformationen (EKI1,...,EKIn) die an der Bedienerschnittstelle (11) empfangenen Konfigurationsdaten einer jeweiligen Eingabe (E1,....,En) gespeichert werden.

5. Verfahren nach einem der vorhergehenden Ansprüche, bei dem eine aus der Historie (H) ermittelte Aktionsliste (AL) über die Bedienerschnittstelle (11) zur Bearbeitung und/oder Auswahl einer Aktion (A1,...,An) durch den Benutzer ausgegeben wird, wobei die Aktionsliste (AL) die in der Historie (H) in den Eingabekontextinformationen (EKI1,...,EKIn) enthaltenen Aktionen in der Reihenfolge des Empfangs an der Bedienerschnittstelle (11) umfasst.

6. Verfahren nach Anspruch 5, bei dem bei der Verarbeitung einer Eingabe (E1,....,En) überprüft wird, ob die in der zugeordneten Eingabekontextinformation (EKI1,...,EKIn) enthaltene Aktion (A1,...,An) eine Aktion (A1,...,An) der Aktionsliste (AL) ist, wobei im positiven Fall die weiteren in dieser Aktionsliste (AL) enthaltenen Aktionen in der in der Aktionsliste (AL) enthaltenen Reihenfolge ausgeführt werden, wobei die den Aktionen zugeordneten Ziele für das in der Eingabe (E1,....,En) enthaltene Objekt (O1, O2) aus einer semantischen Beschreibung ausgelesen und/oder an das Objekt (O1, O2) angepasst werden.

7. Verfahren nach Anspruch 5 oder 6, bei dem in der Aktionsliste (AL) in Bezug auf die Erzeugung und/oder Konfiguration eines Objekts (O1, O2) zusammengehörende Aktionen zu einer oder mehreren Gruppen zusammengefasst werden.

8. Verfahren nach Anspruch 7, bei dem bei der Verarbeitung einer Eingabe (E1,....,En) überprüft wird, ob die in der zugeordneten Eingabekontextinformation (EKI1,...,EKIn) enthaltene Aktion (A1,...,An) eine, in der Reihenfolge erste, Aktion (A1,...,An) einer der Gruppen ist.

9. Verfahren nach Anspruch 8, bei dem im positiven Fall die weiteren in dieser Gruppe enthaltenen Aktionen in der in dieser Gruppe enthaltenen Reihenfolge ausgeführt werden, wobei die den Aktionen zugeordneten Ziele für das in der Eingabe (E1,....,En) enthaltene Objekt (O1, O2) aus einer semantischen Beschreibung ausgelesen und/oder an das Objekt (O1, O2) angepasst wird.

10. Verfahren nach Anspruch 8, bei dem im positiven Fall über die Bedienerschnittstelle (11) eine Eingabemaske ausgegeben wird, in der der Bediener auswählen kann, ob die weiteren in dieser Gruppe enthaltenen Aktionen in der in dieser Gruppe enthaltenen Reihenfolge ausgeführt werden sollen oder nicht.

11. Verfahren nach einem der Ansprüche 6 oder 9, bei dem bei der Verarbeitung der semantischen Beschreibung und/oder der Anpassung an das Objekt (O1, O2) eine Konfliktprüfung durchgeführt wird, in der überprüft wird, ob für das in der Eingabe (E1,....,En) enthaltene Objekt (O1, O2) eine semantische Beschreibung existiert und/oder ob eine Anpassung der Beschreibung an das Objekt (O1, O2) möglich ist, wobei im Falle eines festgestellten Konflikts über die Bedienerschnittstelle (11) eine Warninformation und/oder eine Eingabemaske zur Eingabe (E1,....,En) benötigter Informationen, insbesondere Parameter, durch den Benutzer ausgegeben wird.

12. Computerprogrammprodukt das direkt in den internen Speicher eines digitalen Rechners (10) geladen werden kann und Softwarecodeabschnitte umfasst, mit denen die Schritte gemäß einem der vorhergehenden Schritte ausgeführt werden, wenn das Produkt auf dem Rechner (10) läuft.

13. Rechner (10) zur rechnergestützten Interaktion eines Bedieners mit einem auf dem Rechner (10) ausgeführten Entwicklungswerkzeug, mit dem ein Modell eines technisches Systems erzeugt und/oder konfiguriert werden kann, umfassend eine Recheneinheit (12), eine Bedienerschnittstelle (11) und einen Speicher (13), wobei der Rechner(10), insbesondere die Recheneinheit (12), dazu eingerichtet ist,
- eine Anzahl an aufeinanderfolgenden Eingaben (E1,...,En), die an der Bedienerschnittstelle (11) empfangen werden, zur Konfiguration zumindest eines Objekts (O1, O2) des technischen Systems zu verarbeiten;
- eine Eingabekontextinformation (EKI1,...,EKIn) für die aufeinanderfolgenden Eingaben (E1,....,En) zu erzeugen und die Eingabekontextinformationen (EKI1,...,EKIn) in einer Historie (H) in dem Speicher (13) zu speichern, wobei die Eingabekontextinformationen (EKI1,...,EKIn) in der Historie (H) in der Reihenfolge des Empfangs an der Bedienerschnittstelle (11) vorliegen, und als Eingabekontextinformation (EKI1,...,EKIn) für die Anzahl an Eingaben (E1,....,En) jeweils eine Aktion (A1,...,An) der Eingabe (E1,...,En), die einen zur Konfiguration des Objekts (O1, O2) erforderlichen Schritt umfasst, und ein Ziel (Z1,...,Zn) der Aktion, das zumindest einen Parameter der Aktion (A1,...,An) umfasst, zu speichern.

14. Rechner (10) nach Anspruch 13, **dadurch gekennzeichnet, dass** die Recheneinheit (12) dazu eingerichtet ist, die Schritte des Verfahrens gemäß einem der Ansprüche 2 bis 12 durchzuführen.
